# EUROPÄISCHE PATENTSCHRIFT

(11) **EP 1 298 081 B1**
(45) Veröffentlichungstag und Bekanntmachung des Hinweises auf die Patenterteilung: **12.05.2004**
(21) Anmeldenummer: 02020022.6
(22) Anmeldetag: 06.09.2002
(51) Int. Cl.: B65G 57/28, B65G 59/08

(54) **Vorrichtung zum Stapeln oder Entstapeln leerer Transportpaletten**
Device for stacking or destacking of transport pallets
Dispositif d'empilage ou désempilage de palettes de transport

(30) Priorität: 27.09.2001 DE 20115948 U
(43) Veröffentlichungstag der Anmeldung: 02.04.2003
(73) Patentinhaber: NEDCON MAGAZIJNINRICHTING B.V., NL-7000 AA Doetinchem (NL)
(72) Erfinder: de Jong, Leen-Pieter, 7051 Varsseveld (NL)
(74) Vertreter: Christophersen & Partner

(56) Entgegenhaltungen:
- EP-A- 1 000 886
- EP-A- 1 211 198
- DE-B- 1 116 599
- US-A- 6 050 771

## Beschreibung

Die Erfindung betrifft eine Vorrichtung zum Stapeln leerer Transportpaletten wie z.B. Euro-Paletten mit den im Oberbegriff des Patentanspruchs 1 angegebenen Merkmalen.

In der Lager- und Kommissioniertechnik wird sehr häufig mit Paletten als Lagerhilfsmittel gearbeitet. Besonders verbreitet sind z.B. die standardisierten Euro-Paletten. Nach Entleerung der Paletten, z.B. im Kommissionierbetrieb, werden die leeren Paletten zu Palettenstapeln geschichtet und dann durch Fördereinrichtungen oder Förderfahrzeuge zu Sammelpunkten befördert.

Das Entnehmen der einzelnen geleerten Paletten aus z.B. einem Kommissionierregal sowie deren Zusammensetzen zu Palettenstapeln erfolgt fast immer von Hand. Für den jeweiligen Mitarbeiter ist dies eine schwere körperliche Arbeit, da die Paletten oft ein erhebliches Gewicht aufweisen und es zur Bildung der Palettenstapel erforderlich ist, die jeweilige Palette mit ihrem gesamten Gewicht zunächst auf die Höhe des bereits gebildeten Stapels anzuheben und sodann dort abzusetzen. Vor allem für die Rückenmuskulatur der mit dieser Aufgabe befaßten Mitarbeiter ist diese Tätigkeit sehr belastend. Als erschwerend tritt hinzu, daß nicht nur ein einfaches Ablegen im Sinne von Aufeinanderschichten der leeren Paletten gefordert ist, sondern möglichst auch ein Ausrichten der Paletten des Palettenstapels entlang zumindest einer gemeinsamen Schmalseite. Durch dieses Ausrichten, welches die beschriebene Arbeit zusätzlich erschwert, wird der Transport der gebildeten Palettenstapel auf den nachgeordneten Förder- und Transporteinrichtungen zuverlässiger.

Eine Vorrichtung mit den im Oberbegriff angegebenen Merkmalen ist aus der EP 1 000 886 A1 bekannt. Diese dient allerdings nicht dem Stapeln leerer Transportpaletten, sondern dem Stapeln gleichartiger Behälter, welche anschließend zusammen mit weiteren, gleichartigen Stapeln auf einer gemeinsamen Transportpalette abgesetzt werden. Zur Bildung eines vertikalen Behälterstapels werden die Behälter zunächst auf einer horizontalen Ladefläche so hintereinander ausgerichtet, daß sie sich mit ihren Schmalseiten auf dieser Ladefläche abstützen. Sodann wird die Ladefläche aus ihrer zunächst horizontalen Ausrichtung bis in eine vertikale Ausrichtung verschwenkt. Zur Stabilisierung der Behälter während dieses Verschwenkens ist die Ladefläche mit Vakuumsaugeinrichtungen versehen. Dank dieser Saugeinrichtungen bleibt der Behälterstapel während des Aufschwenkens auf der Ladefläche haften, bis der Stapel nach Erreichen seiner vertikalen Ausrichtung auf einem Riemenförderer aufsitzt. Auf dem Riemenförderer erfolgt dann der Weitertransport des Behälterstapels zu der mit dem Stapel zu beladenden Transportpalette.

Der Erfindung liegt die **Aufgabe** zugrunde, eine Vorrichtung zu schaffen, mit der sich entleerte Transportpaletten kräftesparend zu für den späteren Weitertransport geeigneten Stapeln zusammensetzen lassen.

Zur **Lösung** dieser Aufgabe wird eine Vorrichtung mit den in Patentanspruch 1 angegebenen Merkmalen vorgeschlagen.

Eine solche Vorrichtung läßt sich besonders kräfteschonend mit einzelnen Transportpaletten beladen. Hierzu werden in einem ersten Verfahrensschritt die einzelnen Paletten zunächst so abgesetzt, daß sie sich mit ihrem einen Rand noch auf dem Boden und mit dem anderen Rand auf dem ersten Schenkel der Palettenaufnahme abstützen. Sodann wird die Palette an ihrem noch auf dem Boden aufliegenden Rand ergriffen, angehoben und gleichzeitig in einer Schwenkbewegung in die Palettenaufnahme hinein befördert. Bei dieser Bewegung schwenkt die Palette um ihren anderen, sich bereits auf dem ersten Schenkel abstützenden Rand. Infolge dieser Schwenkbewegung muß von dem Mitarbeiter nicht das gesamte Gewicht der jeweiligen Palette angehoben werden, sondern nur etwa die Hälfte dieses Gewichts. Zudem ist eine Ausrichtung der Palette nicht erforderlich, da sie sich mit ihrem einen Rand bereits auf dem ersten Schenkel der Palettenaufnahme abstützt, und sie insoweit bereits eine eindeutig definierte und zu den anderen Paletten exakt ausgerichtete Lage einnimmt. Zum Ende des Aufladens legt sich die Palette, leicht schräg geneigt, gegen den zweiten Schenkel der Palettenaufnahme oder, wenn sich dort bereits eine erste Palette befindet, gegen diese erste und damit unterste Palette.

Sobald auf die beschriebene Weise die Palettenaufnahme mit der Höchstzahl dort aufsetzbarer Paletten beladen ist, wird in einem weiteren Verfahrensschritt die gesamte Palettenaufnahme bis in eine andere Endstellung verschwenkt. Während in der ersten Endstellung der erste Schenkel unter einer geringen Neigung zur Horizontalen verläuft, verläuft der erste Schenkel in der zweiten Endstellung im wesentlichen senkrecht. In der zweiten Endstellung liegen die Paletten des Palettenstapels daher horizontal geschichtet übereinander und lassen sich in dieser Lage schließlich als ganzer Stapel von einem geeigneten Palettenförderer zum Zwecke des Weitertransportes aufnehmen, womit das Verfahren beendet ist.

Da der erste Schenkel der Palettenaufnahme unter einer geringen Neigung zur Horizontalen verläuft, nehmen die einzelnen Paletten sogleich nach ihrem endgültigen Aufsetzen eine stabile statische Lage parallel zu dem zweiten Schenkel ein, so daß ein versehentliches Zurückkippen der Palette ausgeschlossen ist. Die Paletten-Anlagefläche des zweiten Schenkels ist mit mindestens einer sich vom freien Rand des zweiten Schenkels in Richtung auf den ersten Schenkel erstreckenden Ausnehmung versehen, in welche die Ladegabel eines Palettenförderers hineinführbar ist. Auf diese Weise wird das Aufnehmen des fertig zusammengestellten Palettenstapels erleichtert. Es ist nicht erforderlich, die Ladegabel des Palettenförderers in den relativ geringen horizontalen Spalt zwischen dem Unterholz und dem Oberholz der untersten Palette einzufahren. Außerdem spielt es bei dieser Ausgestaltung keine Rolle, ob bei Paletten mit ungleich gestalteten Längs- und Querseiten, wie z.B. Euro-Paletten, diese längs oder quer auf der Palettenaufnahme aufliegen, da die Unterseite der untersten Palette in jedem Fall vollständig untergriffen wird.

Von einer Vorrichtung zum Stapeln leerer Transportpaletten, wie sie aus der nach Art. 54 (3) EPÜ zum Stand der Technik gehörenden EP 1 211 198 A1 bekannt ist, unterscheidet sich die erfindungsgemäße Vorrichtung dadurch, daß die Paletten-Anlagefläche des zweiten Schenkels mit mindestens einer sich vom freien Rand des zweiten Schenkels in Richtung auf den ersten Schenkel erstreckenden Ausnehmung versehen ist. In diese Ausnehmung ist die Ladegabel eines Palettenförderers hineinführbar.

Zur Realisierung der Verschwenkbarkeit der Palettenaufnahme wird mit einer bevorzugten Weitergestaltung der erfindungsgemäßen Vorrichtung vorgeschlagen, daß die Palettenaufnahme um eine an einem ortsfesten Gestell angeordnete Achse schwenkbar ist, die sich parallel sowohl zu dem ersten wie auch dem zweiten Schenkel erstreckt.

Mit dem Ziel einer kräftesparenden Tätigkeit für den Bediener der Vorrichtung wird ferner vorgeschlagen, daß die Achse, um die herum die Schwenkbewegung erfolgt, nahe der Schwerpunktsachse der mit einem vollständigen Palettenstapel gefüllten Palettenaufnahme angeordnet ist. Infolge dieser Anordnung der Achse läßt sich die gefüllte Palettenaufnahme mit sehr wenig Kraftaufwand von der einen Endstellung in die andere Endstellung verschwenken. Umgekehrt ist ebenfalls mit geringem Aufwand ein Zurückschwenken der inzwischen entleerten Palettenaufnahme von der zweiten Endstellung in die erste Endstellung möglich.

Um ein versehentliches Verschwenken der Palettenaufnahme zu vermeiden, wird mit einer weiteren Ausgestaltung vorgeschlagen, daß die Palettenaufnahme in jeder der beiden Endstellungen arretierbar ist. Ein entsprechendes Arretierelement kann wahlweise an der verschwenkbaren Palettenaufnahme oder dem ortsfesten Gestell angeordnet sein.

Zum erleichterten Beladen der Palettenaufnahme ist deren erster Schenkel vorzugsweise entlang seines dem zweiten Schenkel abgewandten freien Randes offen gestaltet. Dies erleichtert das vorläufige Absetzen der mit ihrem anderen Rand noch auf dem Boden aufliegenden Palette.

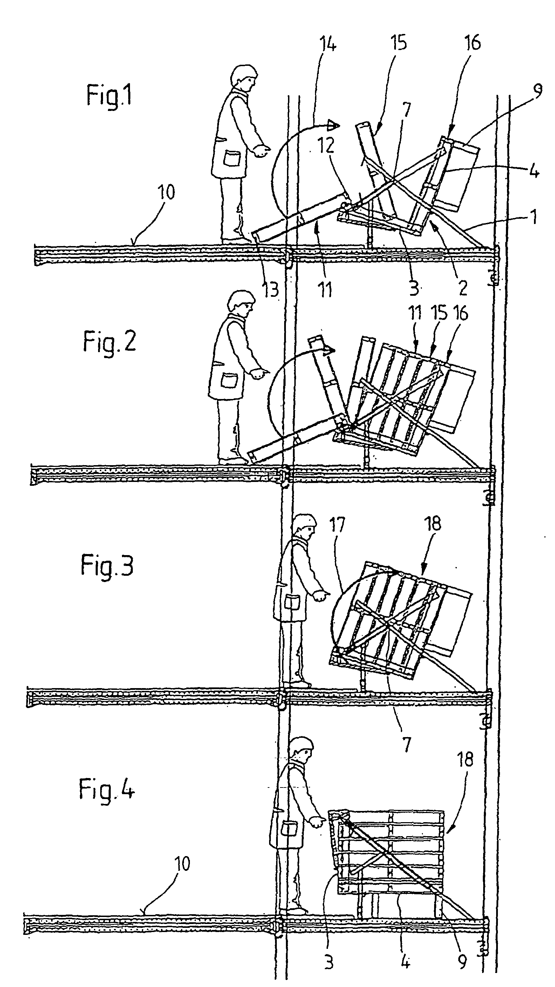

Weitere Vorteile und Einzelheiten werden nachfolgend anhand eines auf der Zeichnung dargestellten Ausführungsbeispieles der Erfindung erläutert. Die Figuren 1 bis 8 der Zeichnung zeigen jeweils eine erfindungsgemäße Vorrichtung zum Stapeln leerer Transportpaletten, wobei jeweils unterschiedliche Verfahrensstadien beim Betrieb der Vorrichtung dargestellt sind.

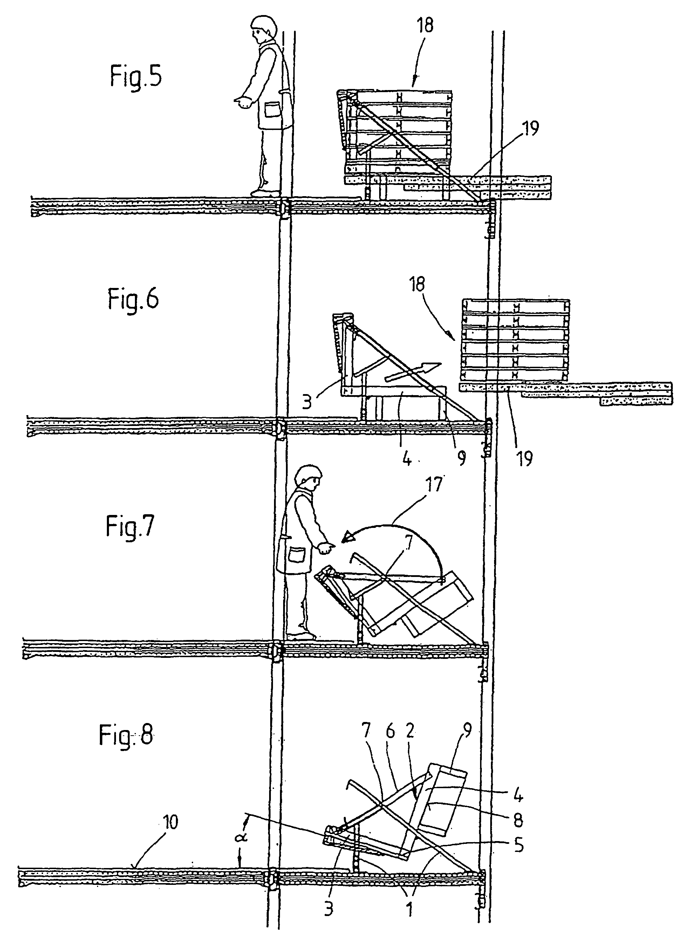

Die Erläuterung der Vorrichtung und des Verfahrens erfolgt zunächst anhand der Figur 8, da Figur 8 die Vorrichtung in entleertem Zustand, d.h. ohne Paletten, darstellt. Die Vorrichtung besteht in erster Linie aus einem ortsfesten Gestell 1 und einer darin schwenkbar angeordneten Palettenaufnahme 2. Die Palettenaufnahme 2 setzt sich aus einem ersten Schenkel 3 und einem zweiten Schenkel 4 zusammen, wobei die beiden Schenkel 3, 4 rechtwinklig zueinander angeordnet sind. Am Ort 5 sind die Schenkel 3, 4 starr miteinander verbunden. Außerdem sind die Schenkel 3, 4 auch über eine Querstrebe 6 starr miteinander verbunden. An der Querstrebe 6, und zwar ungefähr in deren Mitte, befindet sich außerdem eine Achse 7, über die die Palettenaufnahme 2 verschwenkbar in dem Gestell 1 aufgehängt ist.

In der Figur 8 ist die Palettenaufnahme 2 in ihrer ersten Endstellung dargestellt. In dieser Endstellung weist der erste Schenkel 3 eine geringe Neigung mit dem Neigungswinkel α zur Horizontalen auf. Dieser Neigungswinkel α beträgt vorzugsweise zwischen 5° und 15°.

An der Unterseite 8 des zweiten Schenkels 4 ist ein Stützfuß 9 angeordnet, mit dem sich die Palettenaufnahme in ihrer anderen Endlage auf dem Boden 10 abstützen kann.

Der Einsatz der anhand der Figur 8 allgemein beschriebenen Vorrichtung wird nunmehr anhand der Figuren 1 bis 7 erläutert.

Figur 1 zeigt den Verfahrensschritt des Beladens der Vorrichtung mit einzelnen Paletten, vorzugsweise den relativ schwergewichtigen Euro-Paletten. Die Palette 11 wird mit ihrem vorderen Rand 12 auf den äußeren Rand des ersten Schenkels 3 aufgesetzt, wohingegen der hintere Rand 13 der Palette 11 noch auf dem Boden 10 aufliegt. In diese Lage kann die Palette 11 relativ kräfteschonend gebracht werden. Sodann wird die Palette 11 an ihrem hinteren Rand 13 angehoben und entsprechend dem Schwenkpfeil 14 auf die Palettenaufnahme 2 befördert. Hierbei schwenkt die Palette 11 um ihren vorderen Rand 12, der bereits auf dem ersten Schenkel 3 der Palettenaufnahme 2 aufliegt. Mit dem Bezugszeichen 15 ist eine statisch unbestimmte Position bezeichnet, die die Palette einnimmt, bevor sie zur endgültigen Anlage an den zweiten Schenkel 4 bzw. eine dort bereits befindliche Palette 16 gelangt. Diese erste bzw. unterste Palette 16 stützt sich daher mit ihrer Flachseite gegen den zweiten Schenkel 4 ab. Die in der Zwischenstellung 15 gezeichnete Palette legt sich sodann flächig gegen die Palette 16, und die gemäß Figur 1 gerade anzuhebende Palette 11 wiederum gegen die Palette 15 etc. Während dieses Beladens der Palettenaufnahme 2 mit den einzelnen Paletten befindet sich die Palettenaufnahme in ihrer ersten Endstellung.

Figur 2 zeigt ein fortgeschrittenes Stadium, bei der sich bereits nahezu alle aufnehmbaren Paletten auf der Palettenaufnahme finden.

Bei dem Verfahrensstadium Figur 3 ist die Palettenaufnahme 2 vollständig mit hier insgesamt sechs Paletten beladen. Ist dies geschehen, wird die gesamte Palettenaufnahme 2 einschließlich der darauf befindlichen Paletten entsprechend dem Schwenkpfeil 17 bis in die in Figur 4 dargestellte Lage verschwenkt. Hierbei führt die Palettenaufnahme 2 eine Drehung um die Achse 7 mit einem Drehwinkel zwischen 75° und 85° durch, und befindet sich nunmehr in einer zweiten Endstellung. In dieser Endstellung verläuft der erste Schenkel 3 senkrecht, und der zweite Schenkel 4 horizontal. Hierbei stützt sich die Palettenaufnahme 2 über den Stützfuß 9 auf dem Boden 10 ab.

Das Verschwenken aus der ersten Endstellung gemäß Figur 3 in die zweite Endstellung gemäß Figur 4 bereitet keine großen körperlichen Probleme, da die Achse 7 nahe der Schwerpunktsachse der mit dem vollständigen Palettenstapel 18 gefüllten Palettenaufnahme 2 angeordnet ist.

Ferner ist eine Arretierung vorhanden, welche die Palettenaufnahme 2 sowohl in der ersten Endstellung, wie auch in der zweiten Endstellung arretiert, d.h. blockiert. Erst nach einem manuellen Lösen der Arretiervorrichtung läßt sich die Palettenaufnahme in die jeweils andere Stellung verschwenken.

In den Figuren 5 und 6 ist in zwei aufeinanderfolgenden Stadien dargestellt, wie der vollständige Palettenstapel 18 unter Verwendung eines Palettenförderers abgeholt wird. Der Palettenförderer ist mit einer teleskopisch ausfahrbaren Ladegabei 19 versehen, die sich in den zweiten Schenkel 4 der Palettenaufnahme hineinfahren läßt. Damit keine Kollision zwischen der Ladegabel 19 und dem zweiten Schenkel 4 eintritt, ist die Paletten-Anlagefläche des zweiten Schenkels 4 mit zwei sich vom freien Rand des zweiten Schenkels in Richtung auf den ersten Schenkel 3 erstreckenden Ausnehmungen versehen. In jede dieser beiden Ausnehmungen kann eine der paarweise vorhandenen Ladegabeln 19 horizontal einfahren. Wird anschließend die Ladegabel 19 angehoben, gelangt der gesamte Palettenstapel 18 auf die Ladegabel und kann dann horizontal abgefördert werden, wie dies in Figur 6 dargestellt ist.

Die Palettenaufnahme ist entleert und läßt sich gemäß Figur 7 von Hand wieder in ihre erste Endstellung zurückschwenken. Gemäß Figur 8 steht die Palettenaufnahme dann wiederum zur Befüllung mit einem neuen Palettenstapel zur Verfügung.

Insbesondere Figur 3 läßt erkennen, daß das beschriebene Verfahren nicht nur ein besonders kräfteschonendes Arbeiten ermöglicht, sondern auch Vorteile bei der Ausrichtung der einzelnen Paletten zueinander bietet. Da sämtliche Paletten des Palettenstapels 18 mit ihrer einen Schmalseite auf dem geneigten ersten Schenkel 3 aufliegen, sind die Paletten bezüglich dieser Ebene exakt zueinander ausgerichtet. Diese Ausrichtung erleichtert den späteren Weitertransport des Palettenstapels.

Die Vorrichtung läßt sich nicht nur für das Stapeln, sondern auch für das Entstapeln von angelieferten Palettenstapeln einsetzen. Die Anlieferung des Palettenstapels erfolgt gemäß Figur 6, anschließend wird die Vorrichtung in die Stellung nach den Figuren 1 bis 3 geschwenkt, in der die einzelnen Paletten kräftesparend entnommen werden können.

Die Arretierung der Palettenaufnahme in ihren beiden Endstellungen erfolgt vorzugsweise automatisch. Bei Bedarf kann auch ein Schalter installiert werden, der eine Meldung an ein Bediengerät weitergibt, wenn ein Palettenstapel fertig zusammengesetzt ist. Sobald der nachgeschaltete Palettenförderer den Palettenstapel abgeholt hat, kann die Palettenaufnahme 2 wieder in ihrer Ausgangsposition zurückgeschwenkt werden, und wird auch in dieser Position wieder automatisch verriegelt.

### Bezugszeichenliste

- 1: Gestell
- 2: Palettenaufnahme
- 3: erster Schenkel
- 4: zweiter Schenkel
- 5: Ort
- 6: Querstrebe
- 7: Achse
- 8: Unterseite
- 9: Stützfuß
- 10: Boden
- 11: Palette
- 12: vorderer Rand
- 13: hinterer Rand
- 14: Schwenkpfeil
- 15: Palette
- 16: erste bzw. unterste Palette
- 17: Schwenkpfeil
- 18: Palettenstapel
- 19: Ladegabel
- α: Neigungswinkel

## Patentansprüche

1. Vorrichtung zum Stapeln leerer Transportpaletten wie z.B. Euro-Paletten, mit einer Palettenaufnahme (2) für einen Palettenstapel (18), dessen Paletten (11, 15, 16) sich mit einer ihrer Schmalseiten an einem Schenkel (3) der Palettenaufnahme (2) abstützen, und einer Schwenkeinrichtung zum Verschwenken der Palettenaufnahme (2) von einer als Beladestellung dienenden ersten Endstellung bis in eine zweite Endstellung, in der der Schenkel (3) im wesentlichen senkrecht verläuft,
**dadurch gekennzeichnet,**
**daß** der Schenkel (3) in seiner ersten Endstellung unter einer geringen Neigung zur Horizontalen verläuft, daß die Palettenaufnahme (2) zusätzlich zu dem Schenkel (3) einen zu diesem ersten Schenkel (3) rechtwinkligen zweiten Schenkel (4) aufweist, an dem die unterste Palette (16) des Palettenstapels (18) flach anliegen kann, und daß die Paletten-Anlagefläche des zweiten Schenkels (4) mit mindestens einer sich vom freien Rand des zweiten Schenkels in Richtung auf den ersten Schenkel (3) erstreckenden Ausnehmung versehen ist, in welche die Ladegabel (19) eines Palettenförderers hineinführbar ist.

2. Vorrichtung nach Anspruch 1,
**dadurch gekennzeichnet,**
**daß** die Palettenaufnahme (2) um eine an einem ortsfesten Gestell (1) angeordnete Achse (7) schwenkbar ist, die sich parallel sowohl zu dem ersten (3) wie auch dem zweiten (4) Schenkel erstreckt.

3. Vorrichtung nach Anspruch 1 oder Anspruch 2,
**dadurch gekennzeichnet,**
**daß** die Achse (7) nahe der Schwerpunktachse der mit einem vollständigen Palettenstapel (18) gefüllten Palettenaufnahme (2) angeordnet ist.

4. Vorrichtung nach einem der Ansprüche 1 bis 3,
**dadurch gekennzeichnet,**
**daß** die Palettenaufnahme (2) in jeder der beiden Endstellungen arretierbar ist.

5. Vorrichtung nach einem der Ansprüche 1 bis 4,
**dadurch gekennzeichnet,**
**daß** der erste Schenkel (3) entlang seines dem zweiten Schenkel (4) abgewandten freien Randes offen gestaltet ist.

6. Vorrichtung nach einem der vorangehenden Ansprüche,
**gekennzeichnet durch**
einen an der Unterseite (8) des zweiten Schenkels (4) angeordneten Stützfuß (9).

## Claims

1. Apparatus for stacking empty transporting pallets such as, for example, Euro pallets, having a pallet mount (2) for a pallet stack (18), the pallets (11, 15, 16) of which have one of their narrow sides supported on a leg (3) of the pallet mount (2), and having a pivoting device for pivoting the pallet mount (2) from a first end position, which serves as the loading position, into a second end position, in which the leg (3) runs essentially vertically, **characterized in that** the leg (3), in its first end position, is inclined to a slight extent in relation to the horizontal, **in that** the pallet mount (2), in addition to the leg (3), has a second leg (4), which is at right angles to this first leg (3) and against which the lowermost pallet (16) of the pallet stack (18) can butt flatly, and **in that** the pallet-abutment surface of the second leg (4) is provided with at least one cutout which extends in the direction of the first leg (3), from the free border of the second leg, and into which the loading fork (19) of a pallet conveyor can be guided.

2. Apparatus according to Claim 1, **characterized in that** the pallet mount (2) can be pivoted about a spindle (7) which is arranged on a stationary framework (1) and extends parallel both to the first (3) and to the second (4) leg.

3. Apparatus according to Claim 1 or Claim 2, **characterized in that** the spindle (7) is arranged in the vicinity of the centroid axis of the pallet mount (2) filled with a complete pallet stack (18).

4. Apparatus according to one of Claims 1 to 3, **characterized in that** the pallet mount (2) can be arrested in each of the two end positions.

5. Apparatus according to one of Claims 1 to 4, **characterized in that** the first leg (3) is open along its free border directed away from the second leg (4).

6. Apparatus according to one of the preceding claims, **characterized by** a supporting foot (9) arranged on the underside (8) of the second leg (4).

## Revendications

1. Dispositif pour l'empilement de palettes de transport vides comme par exemple des europalettes, avec un récepteur de palettes (2) pour une pile de palettes (18), dont les palettes (11, 15, 16) s'appuient par l'un de leurs petits côtés sur une branche (3) du récepteur de palettes (2), et un dispositif de pivotement pour le basculement du récepteur de palettes (2) d'une première position extrême servant de position de chargement jusqu'à une seconde position extrême, dans laquelle la branche (3) est sensiblement verticale,
**caractérisé en ce que**
la branche (3) est disposée dans sa première position extrême en formant une faible inclinaison par rapport à l'horizontale, **en ce que** le récepteur de palettes (2) présente en supplément de la branche (3) une seconde branche (4) perpendiculaire à cette première branche (3), sur laquelle la palette (16) inférieure de la pile de palettes (18) peut s'appuyer à plat et **en ce que** la surface d'appui de palette de la seconde branche (4) est pourvue d'au moins un évidement s'étendant depuis le bord libre de la seconde branche en direction de la première branche (3), dans lequel la fourche de chargement (19) d'un transporteur de palettes peut être introduite.

2. Dispositif selon la revendication 1,
**caractérisé en ce que**
le récepteur de palettes (2) peut pivoter autour d'un axe (7) disposé sur un bâti (1) fixe, lequel axe s'étend parallèlement aussi bien par rapport à la première branche (3) qu'à la seconde branche (4).

3. Dispositif selon la revendication 1 ou la revendication 2,
**caractérisé en ce que**
l'axe (7) est disposé à proximité de l'axe du centre de gravité du récepteur de palettes (2) rempli avec une pile de palettes (18) complète.

4. Dispositif selon l'une des revendications 1 à 3,
**caractérisé en ce que**
le récepteur de palettes (2) peut être bloqué dans chacune des deux positions extrêmes.

5. Dispositif selon l'une des revendications 1 à 4,
**caractérisé en ce que**
la première branche (3) est conçue ouverte le long de son bord libre opposé à la seconde branche (4).

6. Dispositif selon l'une des revendications précédentes,
**caractérisé par**
un pied d'appui (9) disposé sur le côté inférieur (8) de la seconde branche (4).
